(19) Europäisches Patentamt

European Patent Office

Office européen des brevets

(11) **EP 1 374 419 B1**

(12) **EUROPÄISCHE PATENTSCHRIFT**

(45) Veröffentlichungstag und Bekanntmachung des Hinweises auf die Patenterteilung:
**25.05.2005   Patentblatt 2005/21**

(51) Int Cl.⁷: **H04B 1/06**

(21) Anmeldenummer: 02729808.2

(22) Anmeldetag: **15.03.2002**

(86) Internationale Anmeldenummer:
**PCT/DE2002/001019**

(87) Internationale Veröffentlichungsnummer:
**WO 2002/075953 (26.09.2002 Gazette 2002/39)**

(54) **FUNKÜBERTRAGUNGSVERFAHREN IM INNENRAUMBEREICH ZUR PARALLELEN FUNKÜBERTRAGUNG VON DIGITALEN DATENTEILSTRÖMEN UND MOBILES FUNKÜBERTRAGUNGSSYSTEM**

INDOOR RADIO TRANSMISSION METHOD FOR PARALLEL RADIO TRANSMISSION OF DIGITAL DATA SUB-STREAMS AND A MOBILE RADIO TRANSMISSION SYSTEM

PROCEDE DE RADIOTRANSMISSION DANS LA ZONE INTERIEURE POUR ASSURER UNE RADIOTRANSMISSION PARALLELE DE FLUX PARTIELS DE DONNEES NUMERIQUES ET SYSTEME DE RADIOTRANSMISSION MOBILE

(84) Benannte Vertragsstaaten:
**AT BE CH CY DE DK ES FI FR GB GR IE IT LI LU MC NL PT SE TR**

(30) Priorität: **15.03.2001   DE 10114052**

(43) Veröffentlichungstag der Anmeldung:
**02.01.2004   Patentblatt 2004/01**

(73) Patentinhaber: **Siemens Aktiengesellschaft 80333 München (DE)**

(72) Erfinder:
 • **JUNGNICKEL, Volker 10435 Berlin (DE)**
 • **KRÜGER, Udo 12161 Berlin (DE)**
 • **POHL, Volker 10407 Berlin (DE)**
 • **VON HELMOLT, Clemens 12205 Berlin (DE)**
 • **HAUSTEIN, Thomas 13187 Berlin (DE)**
 • **STANCZAK, Slawomir 10551 Berlin (DE)**

(56) Entgegenhaltungen:
 **US-A- 6 144 711**

 • **GOLDEN G D ET AL: "Detection algorithm and initial laboratory results using V-BLAST space-time communication architecture" ELECTRONICS LETTERS, IEE STEVENAGE, GB, Bd. 35, Nr. 1, 7. Januar 1999 (1999-01-07), Seiten 14-16, XP006011643 ISSN: 0013-5194 in der Anmeldung erwähnt**
 • **KITAOKA Y ET AL: "A consideration on the computational requirements of blind equalization using the orthogonal projection" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31. Mai 1998 (1998-05-31), Seiten 526-529, XP010289978 ISBN: 0-7803-4455-3**

**Beschreibung**

Die Erfindung bezieht sich auf ein Funkübertragungsverfahren im Innenraumbereich zur parallelen Funkübertragung von digitalen Datenteilströmen, die durch eine Raum-Zeit-Kodierung abhängig vom gewählten Datenmodulationsformat zu einer Anzahl n Datenteilsignale geformt werden, in einem frequenzbegrenzten, vielpfadigen Übertragungskanal zwischen einer Anzahl n Sendepfaden und einer Anzahl m (m ≥ n), an unterschiedlichen Orten im Innenraumbereich positionierten Empfangspfaden mit einer Messung der Elemente der komplexwertigen Kanalmatrix zur Schätzung des Raum-Zeitverhaltens des Übertragungskanals und einer Raum-Zeit-Signalverarbeitung in den Empfangspfaden unter Ermittlung einer aus der komplexwertigen Kanalmatrix abgeleiteten Wichtungsmatrix zur simultanen Wiedergewinnung der Datenteilsignale, die in einer Raum-Zeit-Dekodierung wieder zu den digitalen Datenteilströmen geformt werden, und auf ein mobiles Funkübertragungssystem.

Drahtlose Übertragungskanäle sind nicht fehlerfrei. Signalechos am Empfänger führen zu Überlagerungen und Interferenzen, die die ausnutzbare Band- bzw. Kanalbreite eines mit Daten modulierten Trägers auf einen Wert unterhalb des für einen einzelnen Anbieter lizenzierten Frequenzbereichs beschränken. Die Überwindung dieser Kanalbeschränkung ist ein erster Schritt zu höheren Übertragungskapazitäten in drahtlosen Netzen. Eine heute gängige Methode dazu ist die Mehrfachträger-Modulation, bei der die Übertragungskapazität im Prinzip nur noch durch den zulässigen Frequenzbereich begrenzt wird. Drahtlose Netzwerke sollen aber in der Zukunft einer Vielzahl von Nutzem im kaufmännischen und industriellen Bereich mit Datenraten von 100 Mbit/s, wie sie von drahtgebundenen Netzwerken her bekannt sind, zur Verfügung stehen. Dafür reicht aber der lizenzierte Frequenzbereich nicht aus. Funkübertragungsverfahren, die die Sendesignale räumlich und zeitlich bearbeiten und damit eine hohe spektrale Effizienz aufweisen, scheinen hier die beste Möglichkeit zur weiteren Steigerung der Kapazität von drahtlosen Netzwerken zu bieten.

Herkömmliche Empfänger benutzen omnidirektionale Antennen, von denen zusätzlich zu dem direkten Sendesignal "(line of sight" LOS) eine Reihe von Echos aufgefangen werden. Abhängig von der Empfangsposition weisen diese überlagerten Signale unterschiedliche Amplituden und Phasen auf, sodass eine starke räumliche Variation im Geamtsignal auftritt, die man "Fading" nennt. Fading ist das typische Problem bei der Funkübertragung, das man herkömmlich mit einem vielfachen, sogenannten "Diversity-Empfang" zu lösen versucht. Neuerdings werden auch "Spreizfrequenztechniken" eingesetzt, die die Tatsache ausnutzen, dass Fading ein frequenzselektives, schmalbandiges Phänomen ist. Breitbandige Signale können zumindest teilweise die räumliche Signalveränderung ausgleichen. In modernen Übertragungssystemen wird der Träger mit digitalen Signalen moduliert. Das direkte Signal und seine Echos erreichen den Empfänger hierbei mit unterschiedlichen Verzögerungen. Signifikantes Übersprechen aufeinanderfolgender Daten-Bits wird dabei immer dann festgestellt, wenn die Bitdauer in den Bereich der Laufzeitstreuung $\tau_{delay}$ kommt, die als das zweite statistische Moment in der Kanalimpulsantwort definiert und umgekehrt proportional zur Kanal-Bandbreite B ist, die sich errechnet zu

$$B = \frac{1}{2\pi\tau_{delay}} \; . \tag{1}$$

Die nutzbare Bandbreite für die Modulation ist annähernd auf die Kanal-Bandbreite B begrenzt. In normalen Innenräumen kann der Wert hierfür bei nur wenigen Megahertz liegen, insbesondere beim Fehlen des direkten Signals. Hochschnelle Datenübertragung auf einer einzigen Trägerfrequenz kann deshalb nur mit einem Modulationsschema hoher spektraler Effizienz realisiert werden. Die Empfangsempfindlichkeit ist dann jedoch reduziert.

Bei einer Überschreitung der Kanalgrenzen kann durch Verwendung von mehreren Trägerfrequenzen die Übertragungskapazität gesteigert werden. Orthogonales Frequenzteilungs-Multiplex (OFDM) ist eine häufig verwendete Methode zur Modulation von mehreren Trägerfrequenzen. Dabei können einzelne übertragene Symbole extreme Scheitelwerte aufweisen, die nur mit teuren Breitband-Verstärkern hoher Linearität übertragen werden können. Die Spektrumsgrenzen werden aber auch mit OFDM nicht immer erreicht. Beispielsweise werden mit dem aktuellen ETSI HIPERLAN/2-Standard 64 OFDM-Subträger innerhalb einer Bandbreite von 20 MHz verwendet. Für Einzelanwender ist das ganze Spektrum von 200 bzw. 255 MHz entsprechend dem unteren und oberen 5-MHZ-ISM-Frequenzband nicht verfügbar, da normalerweise nur eine von neunzehn nominellen Trägerfrequenzen für die Übertragung genutzt wird. Abhängig von der Kanalqualität wird die Datenrate durch Veränderung der spektralen Effizienz der OFDM-Subträger-Modulation auf Werte von 6 Mbit/s bis 54 Mbit/s eingestellt [1]. Wenn aber z.B. in gewerblichen Umgebungen mehr als neunzehn Anwender mit einer Basisstation verbunden sind, ist das verfügbare Zeitfenster und damit die Datenrate pro Anwender nur ein Bruchteil dieser Werte. Eine mögliche Abhilfe ist dann die Erhöhung der Anzahl Basisstationen mit Verringerung ihrer Abdeckungsbereiche. Insgesamt setzt hier also eine umfassende Optimierung der Übertragungsverhältnisse für Innenraumbereiche einen erhöhten Infrastrukturaufwand voraus.

Aus dem Basispatent **US-A-6 144 711**, in der ein umfassender Überblick über verschiedene technische Begriffe und den einschlägigen technologischen Hintergrund der Erfindung gegeben wird, ist ein raum-zeit-kodiertes Signalverarbeitungsverfahren für ein digitales MIMO-System (Multiple Input Multiple Output) bekannt, das gegenüber bekannten Verfahren eine reduzierte Komplexität aufweist. Auch bei diesem Verfahren werden in der Regel die Datensignale und Trainingssymbole zur einfachen Signalidentifizierung zeitlich hintereinander oder auf verschiedenen Trägerfrequenzen gesendet. Desweiteren können sogenannte blinde Kanalschätzverfahren eingesetzt werden, die auf der Statistik des Empfangssignals beruhen. Letztere erfordern jedoch einen deutlich höheren Aufwand, und sind mitunter nicht eindeutig, d.h. es kommt zu Permutationen der Sendesignale nach der Wiederherstellung der Daten. (siehe Spalte 6, Zeilen 6ff). Weiterhin wird eine zeitliche Überlagerung von Pilotsequenzen beschrieben (siehe Spalte 8, Zeile 11ff). Diese betrifft aber das gleichzeitige Senden von Pilot- und Datensignalen auf unterschiedlichen Unterträgern, also in einer für das OFDM Verfahren spezifischen Form.

Ein neuer Freiheitsgrad für die Systemkapazität wird durch räumliche Diversifizierung erzielt. Beispielsweise wird bei einer nachgeführten Richtverbindung die Position des Nutzers durch Aussendung eines Richtstrahls verfolgt. Mehrfachverbindungen von Basisstationen zu beweglichen Nutzem an unterschiedlichen Positionen können durch gleichzeitige Verwendung gleicher Frequenzen bedient werden. Richtstrahlen reduzieren die Anzahl unerwünschter Verbindungen, Echos und anderer Interferenzsignale. Die Vorteile von Richtantennen verbessern also die Verbindungsqualität. In Anordnungen mit Sichtverbindung ist auch die BasisBand-Verarbeitung einfacher als bei OFDM. Wegen der verringerten Anzahl von Signalechos stellt die Sichtverbindung die gesamte Bandbreite des zulässigen Spektrums für die Modulation einer einzigen Trägerfrequenz zur Verfügung. Allerdings muss dann von der Sichtverbindung eine signifikant höhere Leistung eingestrahlt werden als von, allen anderen Signalen. Typischerweise ist eine Strahlbreite von unter 10° erforderlich, um den "Rice Faktor" K (Leistungsverhältnis des Signals der Sichtverbindung zu der Summe der Signale aller Echos) über die steile Schwelle bei 15 dB anzuheben, bei der sich die Laufzeitstreuung plötzlich stark verringert **[2]**.

Richtstrahlen können z.B. mit auf die Basisstation ausgerichteten Homantennen bereitgestellt werden. Allerdings werden bewegliche Nutzer zur Netzverbindung erforderliche Ausrichtprozeduren (Tracking) nicht so einfach akzeptieren. Ein System zur automatischen Positionsbestimmung und Ausrichtung, insbesondere an der Basisstation, erscheint wesentlich aussichtsreicher. Es gibt daher Ansätze mit Antennenarrays, bei denen die komplexwertige Amplitude jedes Elements gemessen wird. Spezielle Signalverarbeitungs-Algorithmen können daraus die Richtung der ankommenden ebenen Welle der Sichtverbindung errechnen. Jedes Antennensignal wird dann mit einer komplexen Wichtung multipliziert und alle Signale werden summiert. Diese lineare Kombination von Antennensignalen ist physikalisch äquivalent mit der Ausrichtung eines Strahls, der auf ein in der gewünschten Richtung liegendes Ziel gerichtet ist (Strahlformung) **[3]**.

Dieser Lösungsvorschlag scheint für drahtlose Netze in Innenräumen nicht praktikabel zu sein. Um zweidimensional eine Strahlbreite von 10° zu erreichen, ist eine große Zahl von Antennenelementen (10x10) erforderlich, und die Anforderungen an den Signalprozessor zur Positionsbestimmung und -verfolgung sind sehr hoch. Bereits bei einem Bruchteil der erforderlichen Antennenelemente sind Versuche mit digitalen Signalprozessoren zur Beherrschung hoher Datenraten fehlgeschlagen. Die derzeit mögliche Prozessorausführung erlaubt Datenraten von 1,5 Mbit/s mit 8 Antennenelementen **[4]**. Im Hinblick auf diese Ergebnisse scheint eine Datenrate von 100 Mbit/s über 10x10 Antennenelemente mit rein digitaler Signalprozessortechnik mittelfristig nicht erreichbar zu sein.

Für hohe Datenraten sind deshalb teilweise Hardwareimplementationen zur Datenverarbeitung in Betracht zu ziehen. Ein Ansatz zur Vereinfachung der Signalverarbeitung, der mehrere vorgeformte Signalstrahlen benutzt, wird mit einer hardwarekonfigurierten Matrix nach Butler vor dem Antennenarray realisiert. Auf diese Weise kann ein Antennenarray mit schaltbarem Signalstrahl realisiert werden. Die Empfangsrichtung wird dann durch Scannen aller Ausgänge der Butler-Matrix nach dem besten Signal gefunden, das dann zum Empfänger durchgeschaltet wird. Die Komplexizität der Butler-Matrix steigt jedoch mit der Anzahl der Ausgänge schnell an. Jedes Antennensignal wird vor dem Erreichen eines Ausgangs einzeln verzögert und dann mit allen anderen Signalen aufsummiert. Deshalb würde eine Butler-Matrix mit 10x10 Ausgängen 10.000 Verzögerungszweige erfordern. Ein derartiges Netzwerk scheint aber nicht sinnvoll realisierbar. Außerdem ist ein 10x10 Antennenarray für 5 GHz, das mit einem Antennenabstand von 3 cm ($\lambda$ /2) eine Fläche von 30x30 cm$^2$ umfasst, zu groß für mobile Stationen, sodass die beschriebene Technik stationären Basisstationen vorbehalten ist oder auf mm-Wellenlängen beschränkt werden muss.

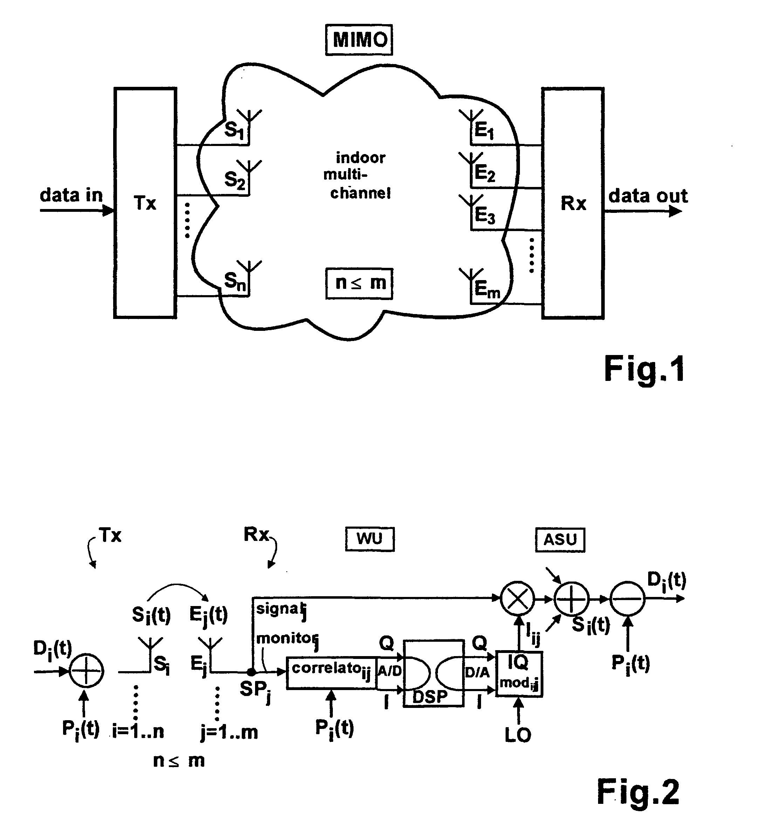

Der **Stand der Technik**, der der Erfindung zugrunde liegt, geht von dem Übertragungsverfahren und dem Übertragungssystem nach Foschini et al. aus, wie sie in der **EP-A2 0 951 091** und den Aufsätzen **[5]**, **[6]** beschrieben werden. Das hieraus bekannte Funkübertragungsverfahren (im Folgenden zur besseren Unterscheidung kurz "BLAST"-Verfahren) für Innenraumbereiche basiert auf einer zeitlich-räumlichen Signalverarbeitung für ein Übertragungssystem mit mehreren Antennen auf Sender- und Empfangsseite (Multielement-Antennen, multiple-input/multiple-output -MIMO- System). Bei dem BLAST-Verfahren wird jedoch nicht die Bandbreite des Übertragungskanals vergrößert, sondern die spektrale Effizienz als Maß für die Datenrate, die innerhalb einer Bandbreite von 1 Hz übertragbar ist. Dabei nehmen spektrale Effizienz und Übertragungskapazität linear mit der Anzahl der parallelen Übertragungspfade zu. Das Prinzip der MIMO-Datenübertragung ist der **Figur 1** für n Sende- und m Empfangsantennen mit insgesamt nxm parallelen Übertragungspfaden zu entnehmen. Auf der Sendeseite wird in einer Raum-Zeit-Kodierungseinheit ein eingehender Datenstrom in eine der Anzahl der Sendeantennen entsprechende Anzahl von Datenteilströmen aufgeteilt. Diese werden als Datenteilsignale zeitlich und räumlich parallel auf derselben Trägerfrequenz drahtlos übertragen. Auf der Empfangsseite werden an unterschiedlichen Orten im Innenraumbereich mit den Empfangsantennen, deren Anzahl größer oder gleich der Anzahl der vorhandenen Sendeantennen ist (m ≥ n), die einander überlagerten Datenteilsignale erfasst. Dabei weist der Innenraum als Nahübertragungsbereich ein normales Übertragungsverhalten ohne ungewöhnliche Überlagerungen, starke Dämpfungen und Störungen durch bewegte Objekte auf. Trotzdem tragen viele Echosignale zum Übertragungssignal bei. Man kann deshalb davon ausgehen, dass die empfangenen Signale bei einem ausreichenden Antennenabstand statistisch unabhängig voneinander und zufällig verteilt sind (Verteilung bei einer Sichtverbindung nach Rice oder nach Raleigh, wenn keine Sichtverbindung gegeben ist).

Bei den folgenden Ausführungen, die zum grundsätzlichen Verständnis des der Erfindung zugrunde liegenden BLAST-Verfahrens beitragen, werden die gesendeten Signale mit dem Sendevektor **S** mit den Komponenten $S_j$ bezeichnet. Nach der Funkübertragung errechnen sich die Komponenten $E_i$ des Empfangsvektors **E** zu

$$E_i = \sum_{j=1}^{n} H_{ij} S_j + N_i \tag{2}$$

mit $H_{ij}$ als Elemente der komplexwertigen Kanalmatrix **[H]** und $N_i$ als Rauschbeitrag im i-ten Empfangspfad. Mit der Kanalmatrix wird das reale Übertragungsverhalten des Innenraums als vielpfadigem Übertragungskanal geschätzt. Beim BLAST-Verfahren werden periodisch Trainingsvektoren übertragen, um die Kanalmatrix zu ermitteln. Da unkorrelierte Sendesignale in einer natürlichen Umgebung sehr wahrscheinlich sind, kann in den meisten Fällen eine zumindest der Anzahl des Sendeantennen entsprechende Anzahl von linearen Gleichungen, die unabhängig voneinander sind, aufgestellt werden. Damit enthält die Kanalmatrix alle Informationen, die notwendig sind, um auf der Empfangsseite das Sendesignal aus dem empfangenen Datensignal zu rekonstruieren. Bei dem bekannten Funkübertragungsverfahren erfolgt dies durch singuläre Eigenwertzerlegung (SVD) und eine anschließende iterative Interferenzauslöschung.

Dem BLAST-Verfahren liegt ein spezielles physikalisches Modell zugrunde. Das Verfahren verwertet erfolgreich das nicht-frequenzselektive, sogenannte "flache Fading", um die Systemkapazität zu verbessern. Ein Innenraum stellt einen Mikrowellenresonator mit partiell reflektierenden Oberflächen dar. Die Eigenschwingungen (Moden) dieses Resonators differieren sowohl in ihrer räumlichen Feldverteilung als auch in ihrer Mittenfrequenz. Von einer Trägerfrequenz werden normalerweise ungefähr 10.000 Moden angeregt (eine einzelne Mode hat eine Spektrallinienbreite vergleichbar mit der Kanalbandbreite B). Wegen der Modenfeldverteilung regt jeder Sender verschiedene Linearkombinationen von Moden an, die sich an den verschiedenen Orten im Raum, wo sich die Empfänger befinden, zusätzlich mit unterschiedlicher Amplitude und Phase überlagern und somit linear unabhängig sind. Diese räumlich bedingten Unterschiede in der Zusammensetzung der Empfangssignale nutzt das BLAST-Verfahren zur Rekonstruktion der ursprünglichen Signale aus.

Das BLAST-Verfahren arbeitet bei einem hohen Signal-Rausch-Verhältnis mit 8 Sende- und 12 Empfangsantennen und einer 16-QAM-Übertragung (QAM: Quadratur-Amplituden-Modulation) als gewähltes Datenmodulationsformat. Dadurch sind nach Berichten spektrale Effizienzen ungefähr bis zu 40 bit/s pro Hz bei Bitfehlerraten im Bereich von 1% erzielbar. Bei dem bekannten Verfahren werden aber alternierende Zeitperioden zur Kanalmatrixmessung und zur Datenübertragung genutzt, so dass ca. 20% der erreichbaren Effektivität wieder verloren gehen. Außerdem wird die Raum-Zeit-Signalverarbeitung in Echtzeit mit einem digitalen Signalprozessor durchgeführt, wodurch der Datendurchsatz auf weniger als 1 Mbit/s begrenzt wird. Dabei könnte mit den vorgesehenen 8 parallelen Übertragungskanälen in Innenräumen ein Gesamtdatendurchsatz von mehreren 10 Mbit/s bis hin zu 100 Mbit/s und mehr erzielt werden. Solche Datenraten scheinen aber in näherer Zukunft mit einer Datenauswertung, die auf einem digitalen Signalprozessor basiert, wie bei dem bekannten BLAST-Verfahren, nicht erreichbar zu sein. Eine hohe Datenrate ist aber insbesondere für Multimedia-Anwendungen (Videos, Computer-Kommunikation etc.) von besonderem Interesse bzw. Grundvoraussetzung für die Anwendbarkeit. Mobile Kommunikationssysteme müssen sparsam mit den zugewiesenen Frequenz-Resourcen umgehen. Gleichzeitig ist aber auch, wie bereits erwähnt, eine hohe Datenrate für Multimediaanwendungen erwünscht, besonders im sogenannten "Indoor-Bereich". Hierfür wird eine hohe spektrale Effizienz benötigt, die mit einer leistungsfähigen Übertragungstechnik gepaart sein muss. Typischerweise ist die Kanalbandbreite in Innenräumen aufgrund von Vielfach-Reflexionen der Funkwellen auf etwa 5 MHz begrenzt. Ausgehend von dem bekannten BLAST-Verfahren als gattungsgemäßem Verfahren, für das bereits weniger Antennenarrays benötigt werden als für die gerichtete Sichtverbindung, ist daher die **Aufgabe** für das erfindungsgemäße Verfahren darin zu sehen, innerhalb dieser "natürlichen" Bandbreite Daten mit sehr hohen Übertragungsraten in einem Bereich von 100 Mbit/s übertragen zu können. Hierfür ist das Erreichen einer spektralen Effizienz von 20 bit/s und Hz notwendig. Ein geeignetes Übertragungssystem zur Durchführung des Verfahrens muss dementsprechend leistungsfähig sein und sehr hohe Geschwindigkeiten bei der Signalverarbeitung ermöglichen.

Als **Lösung** für diese Aufgabe ist bei einem Funkübertragungsverfahren der oben genannten Art deshalb vorgesehen, dass jeder Sendepfad durch ein eindeutig erkennbares Pilotsignal bekannter Struktur, Kodierung und guten Korrelationseigenschaften markiert ist, das dem jeweils zu übertragenden Datenteilsignal in Form einer markierenden Pilotsequenz störungsarm überlagert und die Überlagerung als Sendesignal übertragen wird, die Messung der Elemente der komplexwertigen Kanalmatrix zeitgleich mit der parallelen Übertragung der Sendesignale durchgeführt wird und auf den Pilotsequenzen basiert, deren übertragene Strukturen in jedem Empfangspfad gemessen und mit den bekannten Strukturen korreliert werden, und dass jedes Datenteilsignal zu seiner Rückgewinnung als analog gewichtete Linearkombination aller Empfangssignale dargestellt wird, wobei die analogen Wichtungssignale Elemente einer Wichtungsmatrix sind, die mittels einer geometrischen Projektionstechnik mit rein algebraischer Struktur aus der komplexwertigen Kanalmatrix ermittelt werden.

Bei dem erfindungsgemäßen Funkübertragungsverfahren wird die Kanalschätzung von der Datenübertragung durch das gleichzeitige Durchführen beider Vorgänge voneinander getrennt. Die Kanalmatrix zur Wiederherstellung der ursprünglichen Datenteilsignale wird zeitgleich mit deren Übertragung präzise gemessen. Auf diese Weise wird die gesamte zur Verfügung stehende spektrale Effizienz für die Datenübertragung verfügbar gemacht. Zeitlücken in der Datenübertragung, wie sie bei dem bekannten BLAST-Verfahren durch das alternierend durchgeführte Senden von Trainingssequenzen für die Messung der Kanalmatrix vorhanden sind, treten nicht auf. Der gesamte vielpfadige Übertragungskanal kann bei dem erfindungsgemäßen Übertragungsverfahren ununterbrochen zur Datenübertragung genutzt werden, die Datenteilsignale werden kontinuierlich übertragen. Die Messung der Kanalmatrix erfolgt mit einer der erforderlichen Genauigkeit angepassten Periode zeitparallel dazu. Das präzise Messverfahren für die Kanalmatrix basiert auf der Einführung eines im Vergleich zum Datenteilsignal schwachen gleichfrequenten Zusatzsignals, das mit dem für jede Sendeantenne charakteristischen Pilotsignal moduliert wird. Jedem Datenteilsignal in jedem einzelnen Übertragungspfad wird ein schwaches, speziell kodiertes und gut erkennbares Pilotsignal überlagert. Dabei sei an dieser Stelle bemerkt, dass bei einer gleichzeitigen Aussendung der größte Gewinn an spektraler Effizienz zu erzielen ist. In Einzelfällen kann es jedoch auch sinnvoll sein, das Pilotsignal ohne einen wesentlichen Effizienzverlust zeitversetzt alternierend oder in dafür vorgegebenen Zeitschlitzen zu senden. Ein Vorteil ist hier die Möglichkeit der etwas leistungsstärkeren Ausbildung der Pilotsignale gegenüber den Datenteilsignalen.

Alle genannten Vorgänge erfolgen bei dem erfindungsgemäßen Übertragungsverfahren im analogen Bereich, nur noch die Wichtungswerte werden aus der Kanalmatrix digital berechnet, um gleichzeitig eine numerische Störunterdrückung nach einem bekannten Algorithmus zu erreichen. Durch den Verzicht auf eine rekursive Störunterdrückung kann die Signalverarbeitung jedoch entscheidend einfacher als mit dem bekannten BLAST-Verfahrens ausgelegt werden. Die lineare Kombination der Empfangsantennensignale als entscheidendes Werkzeug zur Wiederherstellung der Originalsignale wird zur signifikanten Steigerung des Daten-Jurchsatzes vollständig analog durchgeführt. Wegen dieser rein algebraischen Struktur ist das erfindungsgemäße Übertragungsverfahren echtzeitfähig. Die digitale Bearbeitung der Signale erfolgt nur noch durch das Setzen der Wichtungswerte in der Linearkombination, zeitbegrenzende digitale Abtastungen direkt im Datenpfad treten nicht mehr auf.

Vorteilhafte Weiterbildungen des erfindungsgemäßen Verfahrens, insbesondere zur Ausprägung des Pilotsignals, zur analogen Signal-Rückgewinnung auf der Empfängerseite, zur Signaldatenmodulation auf der Senderseite, zur Art der Wichtungsmatrix und zur Extraktion der Pilotsignale bei der Signalrückgewinnung, um die Bitfehlerrate senken und die Pilotsignalleistung steigern zu können (k → 1), sind den Unteransprüchen zu entnehmen. Zur Vermeidung von Wiederholungen wird hierzu auf den speziellen Beschreibungsteil verwiesen, in dem ausführlich im Zusammenhang mit den entsprechenden Figuren auf die einzelnen Weiterbildungen eingegangen wird.

Die vorliegende Erfindung bezieht sich weiterhin auf ein mobiles Funkübertragungssystem für den Innenraumbereich zur parallelen Funkübertragung von digitalen Datenteilströmen in einem frequenzbegrenzten, vielpfadigen Übertragungskanal zwischen den einzelnen Sende- und Empfangspfaden mit einem Sender, der Multi-Element-Antennen für eine Anzahl n ortsabhängige, parallele Sendepfade und eine Raum-Zeit-Kodierungseinheit in einer sendeseitigen Signalverarbeitungseinrichtung umfasst, und einem Empfänger, der Multi-Element-Antennen für eine Anzahl m (m ≥ n) ortsabhängige, parallele Empfangspfade, eine einen digitalen Signalprozessor aufweisenden Einrichtung zur Messung der komplexwertigen Kanalmatrix und eine Raum-Zeit-Dekodierungseinheit in einer empfangsseitigen Signalverarbeitungseinrichtung umfasst.

Der zugrunde liegende Stand der Technik ist identisch mit dem für das erfindungsgemäße Übertragungsverfahren gewürdigten Stand der Technik. Ein Verfahren ist immer eng mit einer Anordnung zur Verfahrensdurchführung verknüpft, sodass das Problem zur Schaffung eines leistungsfähigen Systems mit hoher Signalverarbeitungsgeschwindigkeit bereits im Zusammenhang mit der übergeordneten Aufgabe der Erzielung einer hohen Datenrate formuliert wurde. Weitere Aufgabenfaktoren beziehen sich grundsätzlich auf einen funktionsorientierten, vorteilhaften Aufbau und die Kosten des Übertragungssystems.

Bei einem mobilen Funkübertragungssystem der oben beschriebenen Art ist deshalb vorgesehen, dass zur Durchführung des erfindungsgemäßen Funkübertragungsverfahrens der Sender in jedem Sendepfad einen Pilotsignalgenerator zur Erzeugung einer den Sendepfad markierenden, eindeutig erkennbaren Pilotsequenz und eine Einspeisung zur Überlagerung eines aus der markierenden Pilotsequenz generierten Pilotsignals mit dem jeweils zu übertragenden Datenteilsignal im Sendepfad enthält, der Empfänger in jedem Empfangspfad eine Abzweigstelle, über die das jeweilige Empfangssignal als Monitorsignal jeweils einer pro vorhandenem Sendepfad vorgesehenen Wichtungsseinheit zur Ermittlung von analogen Wichtungssignalen zugeführt wird, und über alle Empfangspfade eine analoge Signalkombinationseinheit aufweist, in die die analogen Wichtungssignale einfließen, und dass jede Wichtungseinheit eine der Anzahl der vorhandenen Sendepfade entsprechende Anzahl Korrelationsschaltungen mit je einem Pilotsignalgenerator zur Messung der Struktur des jeweils empfangenen Pilotsignals und einen allen Wichtungseinheiten gemeinsamen digitalen Signalprozessor zur Ermittlung der komplexwertigen Kanalmatrix und der sich daraus ergebenden Wichtungsmatrix sowie einen analogen Komplexwert-Modulator zur Aufprägung des analogen Wichtungssignals auf das jeweilige Empfangssignal aufweist.

Wesentliche Teile der Signalverarbeitung werden bei diesem mobilen Funkübertragungssystem in Hardware ausgeführt, wodurch neben der spektralen Effizienz auch die hohe Übertragungsgeschwindigkeit ermöglicht wird. Das mittels des Digitalprozessors numerisch gewichtete Verarbeitungsnetzwerk wird vollständig schaltungstechnisch realisiert. Der Einsatz von einfachen Signalgeneratoren mit Schieberegistern gemäß einer vorteilhaften Ausgestaltung des mobilen Übertragungssystems ermöglicht einen weitgehend störungsunempfindlichen, preiswerten Schaltungsaufbau für die Messung der Kanalmatrix mit einer hochgenauen Signalrückgewinnung. Auch im Zusammenhang mit dem mobilen Übertragungssystem wird auf die Ausführungen im speziellen Beschreibungsteil hingewiesen, um Wiederholungen zu vermeiden.

Ausbildungsformen der Erfindung werden nachfolgend anhand der schematischen Figuren näher erläutert. Dabei zeigt :

**FIGUR 1**   den Aufbau eines MIMO-Systems,
**FIGUR 2**   das prinzipielle Schema des erfindungsgemäßen Übertragungsverfahrens und -systems,
**FIGUR 3**   die Sendeseite des erfindungsgemäßen Übertragungsverfahrens und -systems,
**FIGUR 4**   einen Generator zur Erzeugung der PN-Sequenzen,
**FIGUR 5**   die Empfangsseite des erfindungsgemäßen Übertragungsverfahrens und -systems,
**FIGUR 6**   die Wichtungseinheit und
**FIGUR 7**   eine Darstellung der geometrischen Projektionstechnik.

Die **FIGUR 1** zeigt den Aufbau eines Multiple-Input / Multiple-Output - Systems **MIMO,** wie es auch aus dem Stand der Technik bekannt ist, mit der Relation eines Senders **Tx** auf der Sendeseite zu einem Empfänger **Rx** auf der Empfangsseite über einen vielpfadigen Übertragungskanal im Innenraumbereich.

In der **FIGUR 2** ist das prinzipielle Schema des erfindungsgemäßen Übertragungsverfahrens und -systems **TS** dargestellt, das im Folgenden im Einzelnen erläutert wird.

## • Überlagerung von Pilotsequenzen

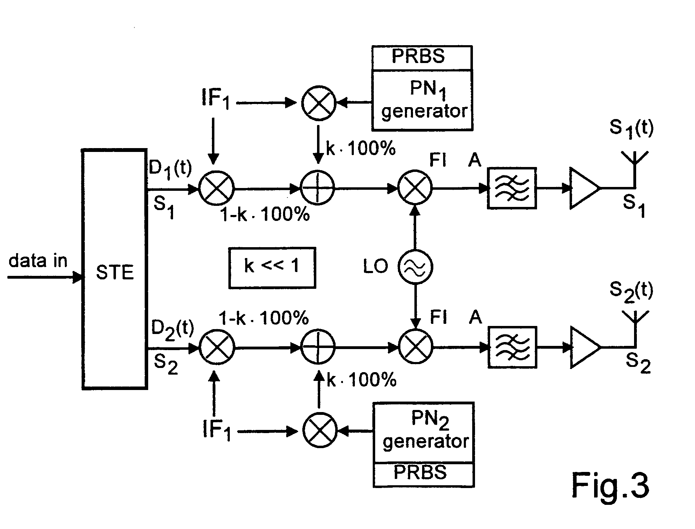

Im Folgenden wird das neue Konzept der Kanalmatrixmessung als wesentliche Komponente des erfindungsgemäßen Funkübertragungsverfahrens erläutert. Grundsätzlich wird jedem Sendepfad ein modulierter, schwacher Nebenkanalträger hinzugefügt. Jedes Datensignal wird also mit einem Pilotsignal überlagert, das für den jeweiligen Sendepfad charakteristisch ist. Auf jedem Empfangspfad werden dann separat Amplitude und Phase des zu jedem Sendepfad gehörenden Nebenkanalträgers gemessen. Insbesondere ist die Frequenz des Nebenkanalträgers identisch mit der Frequenz des Trägers für die Datenübertragung (Gleichkanalbetrieb). Das Konzept wird beispielhaft an einem Sender **Tx**, der die Sendesignale mittels binärer Phasenmodulation (Binary Phase Shift Keying **BPSK**) als Datenmodulationsformat kodiert, mit zwei Sendepfaden bzw. -antennen $S_1$, $S_2$ ($S_i$, **i = 1...n, n = 2**) in **FIGUR 3** gezeigt. Zunächst wird der eingehende Datenstrom **data-in** in einem Raum-Zeit-Enkoder **STE** aufgeteilt, um zwei parallele Datenteilsignale $D_1(t)$, $D_2(t)$ zu erhalten. Diese werden in jedem Sendepfad $S_1$, $S_2$ als im Mittel ausgeglichenen angenommen, d.h. die über eine große Anzahl von Symbolen gemittelte Amplitude ist gleich null. Zusätzlich ist anzunehmen, dass die zeitliche Abfolge der Datenteilsignale $D_1(t)$, $D_2(t)$ statistisch rein zufällig verteilt ist, was durch das sogenannte "Scrambling" erreichbar ist. Jedem Datenteilsignal $D_1(t)$, $D_2(t)$ wird jeweils ein anderes Pilotsignal $P_1(t)$, $P_2(t)$ hinzugefügt, deren Pilotsequenzen $PN_1$, $PN_2$ (pseudonoise **PN)** von einem zugeordneten Pseudo-Zufallsgenerator **(generator)** für binäre Zeichenfolgen (Pseudo Random Binary Sequence **PRBS)** erzeugt und einer Zwischenfrequenz $IF_1$ als Träger für die Datenteilsignale $D_1(t)$, $D_2(t)$ aufmoduliert werden. Dabei sind die Pilotsignale $P_1(t)$, $P_2(t)$ sehr schwach, so dass sie die Datenteilsignale $D_1(t)$, $D_2(t)$ nicht stören. Der Faktor **k,** der das Amplitudenverhältnis zwischen den überlagerten Signalen beschreibt, ist deutlich kleiner als 1 **(k<<1).** Die überlagerten Signale werden dann mittels eines örtlichen Frequenzgenerators **LO** auf das Übertragungsband angehoben, durch Bandfilter **FI** und Verstärker **A** geleitet und als zeitabhängige Sendesignale $S_1(t)$, $S_2(t)$ in den Innenraumbereich gesendet.

Zur eindeutigen Unterscheidung der markierenden Pilotsequenzen $PN_i$ verschiedener Sendepfade $S_i$ im Empfänger **Rx** ist es wichtig, binäre Zeichenfolgen **PRBS** mit guten Kreuzkorrelationseigenschaften zu verwenden. Außerdem werden relativ lange Codefolgen (Länge $L => 2^{14}-1 = 16383$) benötigt, um die schwachen Pilotsignale $P_i(t)$ von den relativ starken gesendeten Datensignalen $D_i(t)$ in Korrelationsschaltungen unterscheiden zu können. Solche langen binären Zeichenfolgen **PRBS** können mit mehrfach rückgekoppelten Schiebe-Registem erzeugt werden. Die aktuellen Rückkopplungsverhältnisse können aus der allgemein bekannten Tabelle der nicht kürzbaren binären Polynome abgeleitet werden **[7]**. Es gibt viele mögliche Rückkopplungsverhältnisse, die unterschiedliche Sequenzfolgen gleicher maximaler Länge **L** erzeugen, aber normalerweise ist die Kreuzkorrelation eines beliebigen Paares dieser Sequenzen nicht optimal.

Von Gold **[8]** ist nun im Prinzip ein doppeltes Schiebe-Register **SR** bekannt, das ein bevorzugtes Sequenz-Paar verwendet. Mit dem Gold-Sequenzgenerator erhält man eine ganze Familie derartiger Sequenz-Paare mit guten Auto- und Kreuzkorrelationseigenschaften. Ein Weg zur Ermittlung des bevorzugten Paares wird in **[9]** aufgezeigt. Es wird mit L=16383 ermittelt. Die beiden bevorzugten Polynome $f_1(x) = x^{14}+x^{10}+x^6+x+1$ und $f_{65}(x) = x^{14}+x^{13}+x^{11}+x^{10}+x^9+x^8+x^6+x^3+x^2+x^1+1$ werden in der Tabelle **[7]** gefunden. Die Polynomexponenten bezeichnen die Abgriffstellen **(taps)** in den Schiebe-Registern **SR,** die Modulo 2 summiert und dann auf den Registereingang rückgekoppelt werden. Zu beachten ist, dass verschiedene Startwerte im Schiebe-Register gleiche Sequenzen erzeugen, jedoch eine Verzögerung verursachen. Bei "Modulo" handelt es sich um eine Rechenvorschrift, mit der immer der ganzzahlige Rest der Division zweier ganzer Zahlen ermittelt wird. "Modulo 2" heißt, dass immer eine beliebige reale Zahl auf- oder abgerundet, durch 2 geteilt und der Rest als Ergebnis in Form einer "1" oder einer "0 " ausgegeben wird. In der Praxis wird diese Operation mit Hilfe binärer XOR-Gatter realisiert.

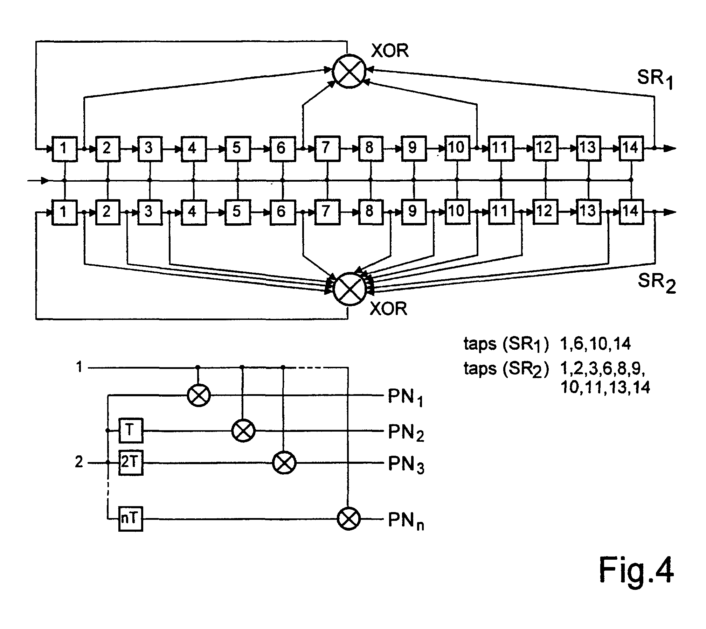

Der so konzipierte Gold-Sequenzgenerator ist in **FIGUR 4** gezeigt. Der Ausgang des unteres Schiebe-Registers $SR_2$ wird um einige Chipzyklen **T** (Chip = Bitdauer) verzögert und dann mit Modulo 2 zu dem Ausgang des oberen Schiebe-Registers $SR_1$ addiert. Die **Taps** hier sind 1, 6, 10 und 14. Die **Taps** in dem unteren Schiebe-Register $SR_2$ sind 1, 2, 3, 6, 8, 9, 10, 11, 13 und 14. Durch Veränderung der Verzögerung zwischen den bevorzugten Sequenzen können **n<L+2** unterschiedliche Gold-Sequenzen ("Gold-Codes") erhalten werden. Durch Computersimulation wurde überprüft, dass mit der in **FIGUR 3** gezeigten Anordnung Gold-Sequenzen erhalten werden, die folgenden periodische Auto- **(PACF[i])** und Kreuz-Korrelationsfunktionen **(PCCF[i])** genügen :

$$PACF[i] \;=\; \begin{cases} 16383 : i=0 \\ \in \{255,-1,-257\} : i\neq0 \end{cases} \tag{3}$$

$$PCCF[i] \;=\; \begin{cases} -1 : i=0 \\ \in \{255,-1,-257\} : i\neq0 \end{cases} \tag{4}$$

Die Verwendung von Pilotsignalen $P_i(t)$ mit gleichen Symbolraten und insbesondere mit einem Modulationsformat mit einer ähnlichen spektralen Leistungsverteilung wie bei den Datenteilsignalen $D_1(t)$, $D_2(t)$ (bzw. beim dem eingehenden Datenstrom **data-in)** ist eine geeignete Methode dafür, bei steigender Übertragungsbandbreite die zumeist sehr stark frequenzabhängige Dämpfung im Kanal ("frequency-selective fading") berücksichtigen zu können. Aufgrund seiner Einfachheit wird die **BPSK**-Technik zur Kanalabschätzung bevorzugt eingesetzt. Dabei ist zu beachten, dass viele Modulationstechniken höherer Ordnung (QPSK, 8-PSK, 16-QAM, 32-QAM, ...) dieselbe spektrale Leistungsverteilung wie die BPSK-Technik aufweisen, wenn man mit gleicher Symbolrate arbeitet. Daher kann eine **BPSK**-basierte Pilotsignal-Modulation z.B. auch mit einer auf 16-QAM beruhenden Daten-Modulation kombiniert werden.

Die sequenz-markierten Pilotsignale $P_i(t)$ erzeugen eine Art Pseudo-Zufallsrauschen, das den Datenteilsignalen $D_i(t)$ hinzugefügt wird. Dadurch wird die Übertragungsleistung etwas herabgesetzt, aber wenn die Leistung der Pilotsignale $P_i(t)$ nur 1 % bis 10 % der Datenteilströme $D_i(t)$ beträgt, wird der Einfluss auf die Datenübertragung vernachlässigbar gering. Noch geringer kann der Störeinfluss jedoch gehalten werden, wenn die Pilotsignale $P_i(t)$ von den rekonstruierten Sendesignalen $S_i(t)$ wieder abgezogen werden (vgl. Figur 2).

**• Messung der Kanalmatrix**

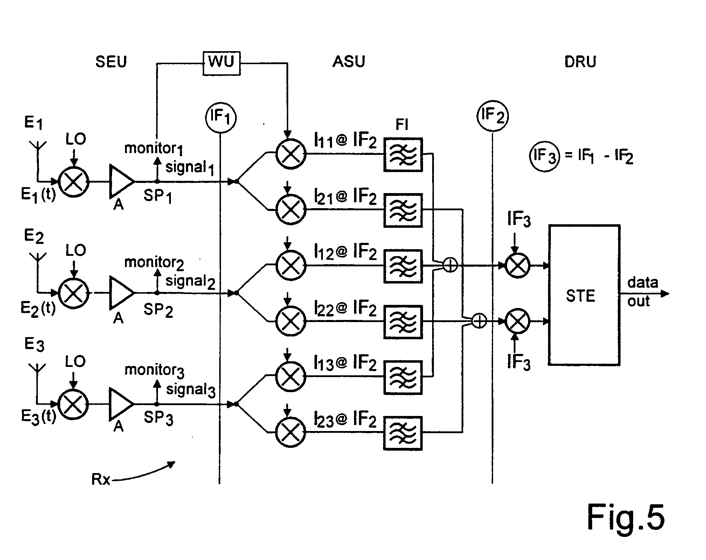

Die **FIGUR 5** zeigt einen Empfänger **Rx**. Dargestellt ist im linken Bereich eine Separationseinheit **SEU** für die Aufteilung in Signal- und Monitorpfade, im mittleren Bereich eine analoge Signalkombinationseinheit **ASU** und im rechten Bereich eine Datenrückgewinnungseinheit **DRU**. Es wird ein Empfänger **Rx** mit 3 Empfangspfaden bzw. -antennen $E_1$, $E_2$, $E_3$ ($E_j$, j = **1...m, m = 3,**) als Ausführungsbeispiel gezeigt. Nach der Bandabsenkung mit internen Oszillatoren **LO** wird jedes Empfangssignal $E_1(t)$, $E_2(t)$, $E_3(t)$ an Abzweigstellen $SP_1$, $SP_2$, $SP_3$ auf Signalpfade **signal**$_1$, **signal**$_2$, **signal**$_3$ und Monitorpfade **monitor**$_1$, **monitor**$_2$, **monitor**$_3$ aufgeteilt. Die entsprechenden Monitorsignale $M_1(t)$, $M_2(t)$, $M_3(t)$ werden zur Messung (Abschätzung) der Kanalmatrix **[H]** benötigt, während die eigentlichen Empfangssignale $E_1(t)$, $E_2(t)$, $E_3(t)$ in einer analogen Signalkombinationseinheit **ASU** weiterverarbeitet werden.

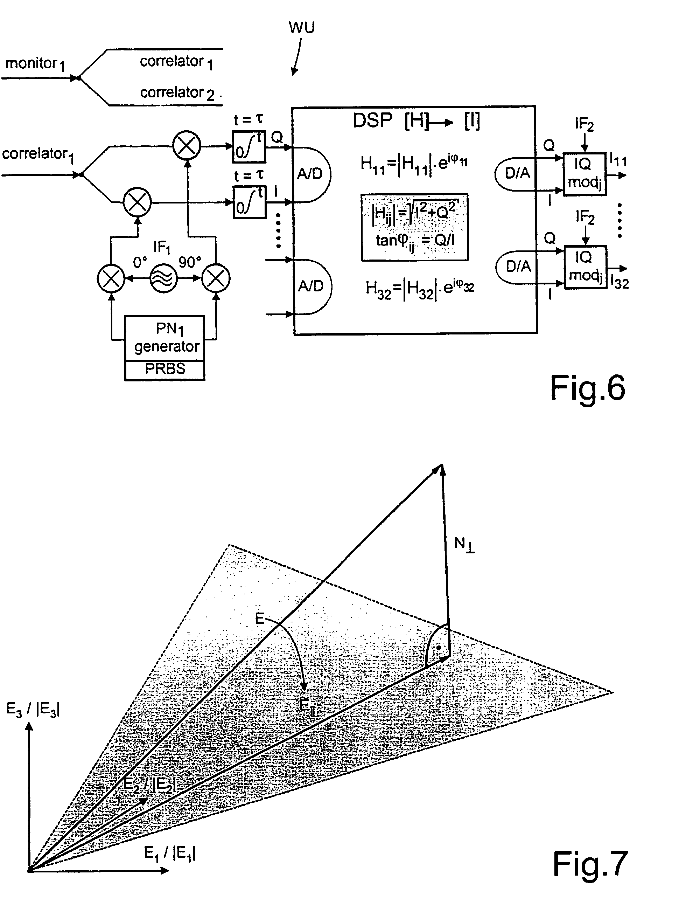

In der **FIGUR 6** werden Einzelheiten einer Wichtungseinheit **WU** als Bindeglied zwischen der Separationseinheit **SEU** und der Signalkombinationseinheit **ASU** zur Abschätzung der Kanalmatrix **[H]** gezeigt. In jedem Empfangspfad $E_1$, $E_2$, $E_3$ werden die Monitorsignale $M_1(t)$, $M_2(t)$, $M_3(t)$ auf eine der Anzahl von Sendeantennen $S_1$, $S_2$ (zwei Sendeantennen als Beispiel bei drei Empfangsantennen) im Übertragungssystem **TS** entsprechenden Anzahl von Korrelationsschaltungen **correlator**$_1$, **correlator**$_2$ verteilt (siehe **FIGUR 6** oben). Die Anzahl aller Korrelationsschaltungen **correlator**$_{ij}$ ergibt sich aus der Multiplikation von **n** Sendepfade mit **m** Empfangspfaden (jeweils mit Laufindex **i** bzw. **j**. In der **FIGUR 6** unten wird beispielhaft die zur markierenden Pilotsequenz **PN**$_1$ der ersten Sendeantenne $S_1$ gehörende Korrelationsschaltung **correlator**$_1$ gezeigt. Synchron mit der binären Zeichenfolge **PRBS** des Pilotsignals **PN**$_1$ im empfangenen Datensignal $E_1(t)$ erzeugt ein **PRBS**-Generator (**generator**) im Empfänger **Rx** dieselbe Zeichenfolge **PRBS,** um dieselbe Pilotsequenz **PN1** wie auf der Sendeseite zu generieren. Der phasengleiche (0°) und ein um 90° phasenverschobener Ausgang des internen **IF1**-Generators werden dann jeweils mit der Pilotsequenz **PN1** moduliert und jedes der beiden resultierenden Signale wird mit dem Monitorsignal $M_1(t)$ multipliziert. Hierbei ist zu beachten daß die Monitorsignale $M_i(t)$ bereits vor den Abzweigstellen $SP_i$ auf die Subträgerfrequenz **IF1** heruntergemischt wurden, sodass nach der Multiplikation ein komplexwertiges Basisband-Signal voliegt. Beide überlagerten Signale werden über eine volle Periode $\tau$ der Zeichensequenz **PRBS** (16383 chip clock cycles) integriert. Wenn die Symbolrate **(chip rate)** bei einer Datenübertragung z.B. 2,5 MHz beträgt, wird eine Periode von 6,5 ms für jede erneute Messung der Kanalmatrix **[H]** benötigt. Dabei wird zutreffend vorausgesetzt, dass sich die Gegebenheiten für den vielpfadigen Übertragungskanal im Innenraum bei 5 GHz während dieser Periodendauer durch Objektbewegungen mit Geschwindigkeiten < 1 m/s nicht entscheidend verändern.

Im Folgenden wird das Extrahieren des Pilotsignals näher beschrieben. Das bei der Korrelationsschaltung **correlator**$_1$ ankommende Monitorsignal $M_1(t)$, das identisch ist mit dem Empfangssignal $E_1(t)$, ist eine lineare Kombination zweier unabhängiger Datenteilsignale $D_j(t)$ und zweier Pilotsignale $P_j(t)$

$$E_1(t) = \sum_{j=1}^{2} H_{1j} D_j(t) + \sum_{j=1}^{2} H_{1j} P_j(t) \qquad (5)$$

Im Ausführungsbeispiel handelt es sich um die Summe von vier **BPSK**-kodierten Signalen auf derselben Trägerfrequenz $\omega$

$$E_1(t) = \frac{1}{2} \sum_{j=1}^{4} \left[ H_{1j} S_j e^{j(\omega t + \pi x_j(t))} + c.c. \right] \qquad (6)$$

wobei $x_j(t)$ die unipolare {0; 1} Darstellung der Daten- oder Pilotsignale und $H_{1j} = H_{1(j-2)}$ für **j>2** und c.c. die Abkürzung für das komplex konjugierte Signal ist. Die Summation gemäß **(6)** läuft von **j=1 bis 4,** weil die hier beschriebene Rechnung für Daten- und Pilotsignale nun gleich ist. Dabei wird angenommen, dass für alle Übertragungspfade ein und derselbe kohärente Frequenzträger verwendet wird. Die beiden hinter den Integratoren gemessenen Signale können wie folgt geschrieben werden, dabei kann das **I**-Signal als Realteil und das **Q**-Signal als Imaginarteil der analogen Messspannung interpretiert werden.

$$I = \frac{1}{2}\int_0^\tau dt E_1(t)\left[e^{j[\alpha t + \pi p_1(t)]} + c.c.\right] \tag{7}$$

$$Q = \frac{1}{2}\int_0^\tau dt E_1(t)\left[e^{j[\alpha t + \frac{\pi}{2} + \pi p_1(t)]} + c.c.\right] \tag{8}$$

Das phasengleiche I-Signal des ersten Sendepfads $S_1$ kann durch Einsetzen von (6) in (7) gefunden werden.

$$I = \frac{1}{4}\int_0^\tau dt\left[\left\{\sum_{j=1}^4 H_{1j}S_j e^{j(2\alpha t + \pi[x_j(t)+p_1(t)])} + c.c.\right\} + \left\{\sum_{j=1}^4 H_{1j}S_j e^{j\pi[x_j(t)-p_1(t)]} + c.c.\right\}\right] \tag{9}$$

Eine ähnliche Formel erhält man für das **Q**-Signal. Der Hochfrequenzanteil (linke Klammer) in (9) kann ignoriert werden, weil die Integration wie ein Tiefpass wirkt. Wenn sich die Kanaleigenschaften während der Periode $\tau$ (**$H_{ij}$=const**.) nicht ändern, erhält man Integrale der Form

$$C = \int_0^\tau dt\ e^{j\pi[x_j(t)-p_1(t)]}\ ,$$

die angeben, ob ein Signal zu den gemessenen **I**- und **Q**-Werten beiträgt oder nicht. Wenn $x_j(t)$ eine der zur zeitlichen Spreizung des Pilotsignals $P_j(t)$ verwendeten **PRBS**-Sequenzen ist, dann ist **C** entweder gleich der periodischen Auto-Korrelationsfunktion **(PACF(0), j=1)** oder gleich der Kreuz-Korrelationsfunktion **(PCCF(0), j $\neq$1)**. Voraussetzung ist jedoch, dass die Pilotsequenzen, die einen n-dimensionalen Vektorraum aufspannen, exakt orthogonal und synchron zueinander sind **(C=$\tau\,\delta_{1j}$** mit $\delta_{ij}$ als Kronecker-Symbol aller natürlichen Paare **ij** zur Beschreibung von Matrizen mit den Werten 1 für **i=j** und 0 für **i $\neq$j)**. Diese Forderung ist für die hier gewählten Goldsequenzen in sehr guter Näherung erfüllt.

Wenn $x_j(t)$ eine zufällige ausgeglichene Datenfolge ist, erhält man das Integral **C = 0** bei einer unendlichen Periode der Sequenz. Im Folgenden werden daher die zufälligen Datenbeiträge vernachlässigt. Die **I**- und **Q**-Signale reduzieren sich dann zu

$$I = \frac{S_1}{4}\mathrm{Re}(H_{11}) \tag{10}$$

$$Q = \frac{S_1}{4}\mathrm{Im}(H_{11}) \tag{11}$$

Wenn die Pilotsignale im Sender gleiche Amplituden aufweisen, können mit der Korrelationsschaltung gemäß **FIGUR 6** die Amplitude

$$|H_{11}| \sim \sqrt{I^2 + Q^2} \tag{12}$$

und die Phasenlage

$$\phi_{11} = \arctan\left(\frac{Q}{I}\right) \tag{13}$$

des Elements $H_{11}$ der Kanalmatrix **[H]** gemessen werden. Die Bestimmung der anderen Matrixelemente erfolgt völlig analog dazu.

Aber auch mit endlichen Folgen können die Beiträge des Datensignals zu den gemessenen **I**- und Q-Werten ausreichend unterdrückt werden, weil sie mit den Pilotsequenzen nicht in Korrelation stehen. Die zufälligen Datensignale können dann als ein den Pilotsignalen überlagertes starkes Rauschen betrachtet werden. Im folgenden Beispiel wird ein Pilotsignal mit 1% bis 10 % der Energie eines Datenteilsignals angenommen. Weil die Datenteilsignale zufällig und untereinander nicht korreliert sind, liegt die Energie 23 dB oberhalb des Pilotsignals. Nach der Korrelation wird das Pilotsignal durch den Spreizgewinn um 10 log(16383) = 42 dB verstärkt, sodass es jetzt zu den **I**- und **Q**-Signalen mit 19 dB mehr Energie beisteuert (oder mit der 9-fachen Amplitude) verglichen mit den Datensignalen. Zu beachten ist, dass das Energieverhältnis zwischen Datenteil- und Pilotsignalen für geringes Übersprechen und hohe Genauigkeit bei der Kanalmessung sorgfältig eingestellt werden muss (Festlegung des Rice-Faktors **k << 1).** Das optimale Verhältnis kann durch eine Bitfehlermessung oder auch durch eine Simulation des Gesamtsystems ermittelt werden. Bereits weiter oben wurde ausgeführt, dass sich bei einer alternierenden Aussendung der Pilotsignale die spektrale Effizienz zwar wieder etwas erniedrigt, dafür aber die Amplitude der Pilotsignale angehoben werden kann (k $\rightarrow$ 1).

Ähnliche Schaltungen wie in den **FIGUREN 5 und 6** werden zur getrennten Messung aller Elemente $H_{ij}$ der Kanalmatrix verwendet. Hinter den Integratoren in **FIGUR 6** werden die analogen Werte in einen digitalen Signalprozessor DSP eingelesen, der die Wichtungen für die analoge Signalverknüpfungseinheit **ASU** berechnet.

### • Berechnung der Wichtungen

Im Folgenden wird nun gezeigt, wie mit der gemessenen Kanalmatrix **[H]** eine passende Wichtungsmatrix **[I]** für die Signalverknüpfungseinheit **ASU** erhalten wird. Wenn die Vektorbeschreibung gemäß **(2)** von links mit der Wichtungsmatrix **[I]** multipliziert wird, erhält man **S'= [I][H]S + [W]N = S +[I]N.** Im Falle von Rauschfreiheit **(N=0)** wird deutlich, dass die Wichtungsmatrix **[I]** die Pseudoinverse der Kanalmatrix **[H]** ist, die definiert wird durch

$$\sum_{j=1}^{m} I_{ij} H_{jk} = \delta_{ik} \tag{14}$$

Man beachte, dass **(14)** nxn-Gleichungen für die **mxn**-Elemente der Wichtungsmatrix **[I]** zur Verfügung stellt und dass es **(m-n)xn**-Freiheitsgrade in der Berechnung der Wichtungsmatrix **[I]** gibt. Bei Berücksichtigung des Rauschens kann die Wahl einer beliebigen, **(14)** erfüllenden Wichtungsmatrix **[I]** deshalb signifikante Fehler bei der Signal-Rückgewinnung verursachen. Dies kommt eindeutig zum Ausdruck durch den zusätzlichen Rauschterm in **S'= S +[I]N,** der von den aktuellen Einstellungen der freien Parameter in der Wichtungsmatrix **[I]** abhängt. Für eine optimale Datenübertragung muss daher der Einfluss des Rauschterms **[I]N** minimiert werden. Diese Aufgabe wird beispielsweise durch die spezielle Wahl der sogenannten Moore-Penrose-Pseudoinversen gelöst.

Im folgenden soll die Wirkung, die diese spezielle Auswahl der Inversen hat, anschaulich dargestellt werden. Zu beachten ist, dass **(2)** eine Transformation zwischen dem n-dimensionalen Sende-Vektorraum $\Sigma^{(n)}$ und dem m-dimensionalen Empfangs-Vektorraum $\Psi^{(m)}$ beschreibt. Wenn kein Rauschen vorhanden ist, liegt der Empfangsvektor **E** deshalb in einer n-dimensionalen Hyperebene im Empfangs-Vektorraum $\Psi^{(m)}$, die von den Spaltenvektoren $c_i$ der Kanalmatrix **[H] = [$c_1$, ... $c_n$]** aufgespannt wird (vergleiche **FIGUR 7).** Bei vorhandenem Rauschen liegt der Empfangsvektor **E** normalerweise außerhalb dieser Ebene.

Das wahrscheinlichste Empfangssignal $\tilde{E}_{\parallel}$ in der Hyperebene kann dann durch Projektion des Empfangsvektors **E** auf diese Ebene unter der Voraussetzung gefunden werden, dass das Rauschen in allen Empfangspfaden dieselbe Charakteristik aufweist (geometrische Projektionstechnik). Wenn der zur Hyperfläche normale Rauschbeitrag $N_{\perp}$ entfernt wird, gibt es eine eins-zu-eins-Beziehung zwischen dem Punkt in der Ebene und dem Sendevektor **S**. Es ist aus der höheren linearen Algebra bekannt, dass die Moore-Penrose Pseudoinverse, die man mit Hilfe einer Singulärwertzerlegung der komplexwertigen Kanalmatrix finden kann, eben diese gesuchte Projektion durchführt. Die rauschbedingte Abweichung vom Originalsignal wird entsprechend definiert und kann als die Rücktransformation des in der Ebene liegenden Rauschens **(14)** interpretiert werden. Wenn keine Information zur Rausch-Charakteristik verfügbar ist, ist diese Methode, die das Rauschen im Empfangsraum $\Psi^{(m)}$ minimiert, deshalb optimal zur Rückgewinnung der Sendevektoren **S** geeignet.

Üblicherweise ist das Rauschverhalten im Empfänger jedoch bekannt, so dass der Fehler im Sendevektorraum $\Sigma^{(n)}$ mit entsprechenden Methoden noch weiter reduziert werden kann. Die Minimierung der mittleren quadartischen Abweichung (Minimum Mean Square Estimation **MMSE**) verletzt **(14)** nur schwach, kann aber den Restfehler bei der Datenrückgewinnung (Übersprechen) gegenüber dem Rauschanteil abwägen. Auf diese Weise kann eine bessere Leistung mit einem algebraischen Ansatz erreicht werden, der kaum schwieriger als die Multiplikation mit der Moore-Penrose-Pseudoinversen ist.

Die im bekannten BLAST-Verfahren verwendete Lösung verwendet dagegen eine rekursive Interferenzauslöschung im Anschluß an die Multiplikation mit der Moor-Penrose-Pseudoinversen. Diese nachträgliche "Entstörung" ist aber aufgrund von **(14)** grundsätzlich nur dann erforderlich, wenn die Messung der Kanalmatrix fehlerbehaftet ist, wovon bei dem bekannten BLAST-Verfahren auszugehen ist. Durch den resultierenden Meßfehler wurde hier eine fehlerhafte Pseudoinverse berechnet, die bei der Rekonstruktion der Signale zum Übersprechen zwischen den einzelnen Datenpfaden führte. Eine verbesserte Kanalschätzung würde im BLAST-Verfahren mehr Zeit beanspruchen, wodurch die spektrale Effizienz noch weiter reduziert würde. Die rekursive Störunterdrückung im BLAST-Verfahren beseitigt zumindest teilweise dieses unerwünschte Übersprechen und damit die Folgen einer fehlerhaften Kanalmessung. Durch eine deutlich verbesserte Kanalmessung kann also auf die schwer in Hardware zu implementierende, rekursive Fehlerkorrektur verzichtet werden. Im Vergleich mit dem in der EP-A2 0 951 091 genannten, sehr einfachen Meßverfahren wird deshalb bei dem erfindungsgemäßen Übertragungsverfahren durch die Verwendung von orthogonalen PN-Sequenzen (Goldfolgen) für die Messung der Kanalmatrix eine wesentlich erhöhte Genauigkeit erzielt, sodass auf eine aufwändige Störunterdrückung verzichtet werden kann. Insofern wird die Wiederherstellung der Sendeteilsignale durch das verbesserte Meßverfahren für die Kanalmatrix wesentlich vereinfacht. Erst hierdurch wird die im Ausführungsbeispiel dargestellte rein analoge Signalrekonstruktion praktikabel.

Die für **(19)** benötigte algebraische Matrixrechnung basiert auf einer Zeitmittelwertmessung der Kanalmatrix [H]. Die Datenverarbeitung kann deshalb unabhängig von der Datenübertragung in einem digitalen Signalprozessor **DSP** erfolgen. Der in der **FIGUR 6** dargestellte digitale Signalprozessor **DSP** zeigt neben den vor- bzw. nachgeschalteten erforderlichen Wandlungen vom Analogen ins Digitale und umgekehrt **(A/D** bzw. **D/A)** die erforderlichen Rechenschritte zur Ermittlung der einzelnen Elemente **Hij** der Kanalmatrix **[H]** aus den Messrößen **I** und Q, aus denen dann die Pseudoinverse berechnet wird, die ihrerseits dann wiederum über die analogen Größen I und **Q** an die I-Q-Modulatoren **IQ mod**$_{ij}$ weitergeleitet werden. In der analogen Signalverknüpfungseinheit **ASU** können die Rechenergebnisse jetzt zur Durchführung der letzten Schritte der Hardware-Vektorsignal-Rückgewinnung benutzt werden, insbesondere für die Multiplikation mit den durch die I-Q-Modulatoren **IQ mod**$_{ij}$ analog erstellten Wichtungen **I**$_{ij}$ und das Aufsummieren der verschiedenen Beiträge aller Sendeantennen. Die Anzahl der erforderlichen I-Q-Modulatoren **IQ mod**$_{ij}$ entspricht der Anzahl der Elemente **Hij** der Kanalmatrix **[H].**

### • Signalverknüpfungseinheit

Die analoge Signalverknüpfungseinheit **ASU** in der Mitte von **FIGUR 5** ist neben der Korrelatorschaltung zur Messung der Kanalmatrix eine Hauptkomponente des erfindungsgegemäßen Übertragungssystems auf der Seite des Multiantennen-Empfängers **Rx**. Weil alle den Datenpfad beeinflussenden Operationen hardwaremäßig realisiert sind, ist der Durchsatz nicht von der Leistungsfähigkeit des digitalen Signalprozessors **DSP** begrenzt. An dieser Stelle sei bemerkt, dass eine derartige Hardware-Realisierung natürlich auch bei anderen als dem erfindungsgemäßen Übertragungsverfahren eingesetzt werden kann und zwar immer dort, wo Datensignale aus einem linearen Verknüpfungswerk bislang ausschließlich in einem digitalen Signalprozessor verarbeitet wurden. Hierzu zählen insbesondere sogenannte "intelligente Antennenarrays" (smart antennas), die z.B. an den Basisstationen von zukünftigen Mobilfunksystemen zur räumlichen Separation der einzelnen Teilnehmer breiten Einsatz finden werden.

In der Signalverknüpfungseinheit **ASU** werden im praktischen Beispiel Amplitude und Phase einer Zwischenfrequenz **IF**$_2$, die von einem separaten Oszillator erzeugt wird, gemäß jeder ermittelten Wichtung **I**$_{ij}$ durch den digitalen Signalprozesor **DSP** unter Verwendung von konventionellen **I-Q**-Modulatoren **IQ mod**$_{ij}$ angepasst (siehe rechts in **FIGUR 5** und **ASU** in **FIGUR 4,** hier angedeutet durch den Ausdruck "I$_{ij}$ @ IF$_{2}$" ). Derartige Modulatoren sind an sich bekannt und werden üblicherweise in Digitalradios zum Aufmodulieren der digitalen Informationen auf einen Träger eingesetzt. Zu bemerken ist, dass die Benutzung eines solchen einfachen **I-Q**-Modulators eine neue Art darstellt, Antennenwichtungen vorzunehmen, bei der ein Signalprozessor in den Datenpfaden unnötig wird. Ein Signalprozessor im Datenpfad ist normalerweise obligatorisch für intelligente Antennensysteme wie bei dem bekannten BLAST-Verfahren.

Die auf der Zwischenfrequenz **IF**$_1$ empfangenen Signale werden nun individuell herabgesetzt auf die Zwischenfrequenzen **IF**$_3$ = **IF**$_1$-**IF**$_2$, sodass die quasistatische Amlituden- und Phaseninformation der komplexen Wichtung **I**$_{ij}$ des Zwischenfrequenz-Trägers **IF**$_2$ auf die empfangenen Signale übertragen wird. Die gewichteten Signale auf der Zwischenfrequenz **IF**$_3$ werden dann individuell in Bandpässen **FI** gefiltert und in dem zugehörigen Datenzweig aufsummiert. Schließlich werden die Daten zur Rückgewinnung in einen Raumzeitdekoder **STD** eingespeist.

**• Auslegung des Systems für höhere Leistung**

Im oben beschriebenen Beispiel wird die ursprüngliche spektrale Effizienz einer binären Pulslagenmodulation (**BPSK**) mit der Anzahl von zwei Sendeantennen multipliziert. Wenn man Einseitenbandfilter beim Sender annimmt und praxisnah berücksichtigt, dass eine Bandbreite vom 0,8-fachen der Datenrate für die zuverlässige Erkennung der Daten im Basisband benötigt wird, beträgt die spektrale Effizienz bei **BPSK** 1,25 bit/s und Hz. Daher wird im Beispiel eine Effizienz von 2,5 bit/s und Hz realisiert. Mit mehr Sendeantennen oder anderen Modulationsverfahren höherer Ordnung in den aufgeteilten Datenteilströmen erhöht sich die Gesamteffizienz $\eta_{total}$ auf $\eta_{total} = n \times \eta_{mod}$, worin **n** die Anzahl der Datenteilströme und $\eta_{mod}$ die spektrale Effizienz der jeweiligen Modulation der Datenteilströme ist. Mit **n = 8** und $\eta_{mod}$ **= 5** (z.B. bei Modulation 16-QAM) kann eine spektrale Effizienz $\eta_{total}$ von 40 bit/s und Hz erreicht werden. Wenn eine natürliche Kanal-Bandbreite von 2 MHz wie in obigem Beispiel angenommen wird, kann dann mit einer Chiprate von 2,5 MHz eine Datenrate von 100 Mbit/s übertragen werden. Ein derartig hohe Datenrate muss von einem drahtlosen LAN erwartet werden, wie eingangs bereits erwähnt wurde. Gemessen am vorhandenen HIPERLAN/2-Standard, welcher eine maximale spektrale Effizienz von 54 Mbit/s und 20 MHz = 2,7 bit/s und Hz nutzt, kann mit dem erfindungsgemäßen Übertragungsverfahren und einem entsprechend ausgeführten Übertragungssystem die Netzwerkkapazität nahezu um Faktor 15 innerhalb der gleichen spektralen Grenzen gesteigert werden.

**Bezugszeichenliste**

| | |
|---|---|
| **A** | Verstärker |
| **ASU** | analoge Signalkombinationseinheit |
| **correlator**$_{ij}$ | Korrelationsschaltung |
| **data-in** | eingehender Datenstrom |
| **data-out** | ausgehender Datenstrom |
| **DRU** | Datenrückgewinnungseinheit |
| **DSP** | digitaler Signalprozessor |
| **$D_i(t)$** | zeitabhängiges Datenteilsignal |
| **E** | Empfangsvektor |
| **$E_j$** | Empfangspfad bzw. -antenne |
| **$E_j(t)$** | zeitabhängiges Empfangssignal |
| **FI** | Bandfilter |
| **generator** | Pseudo-Zufallsgenerator |
| **$IF_1$, $IF_2$, $IF_3$** | Zwischenfrequenz |
| **[H]** | komplexwertige Kanalmatrix |
| **$H_{ij}$** | Element der Kanalmatrix |
| **i** | Laufindex Sendeseite (i = 1...n) |
| **I** | Realteil der Messspannung |
| **$I_{ij}$** | Element der Wichtungsmatrix |
| **$I_{ij}(t)$** | analoges Wichtungssignal |
| **[I]** | Wichtungsmatrix |
| **IQ mod**$_{ij}$ | I-Q-Modulator |
| **j** | Laufindex Empfangsseite (j = 1...m) |
| **LO** | lokaler Frequenzgenerator |
| **m** | Anzahl der parallelen Empfangspfade |
| **MIMO** | multiple-input/multiple-output -System |
| **monitor**$_j$ | Monitorpfad |
| **$M_j(t)$** | zeitabhängiges Monitorsignal |
| **N** | Rauschvektor |
| **n** | Anzahl der parallelen Sendepfade |
| **$PN_i$** | Pilotsequenz |
| **PRBS** | Pseudo Random Binary Sequence |
| **$P_i(t)$** | zeitabhängiges Pilotsignal |
| **Q** | Imaginärteil der Messspannung |
| **QAM** | Quadratur- Amplitudenmodulation |
| **Rx** | Empfänger |
| **SEU** | Separationseinheit |

| | |
|---|---|
| **signal**$_j$ | Signalpfad |
| **S$_i$(t)** | zeitabhängiges Sendesignal |
| **S$_j$** | Komponenten des empfangenen Sendevektors |
| **SP$_j$** | Abzweigstelle |
| **SR** | Schiebe-Register |
| **STD** | space-time-decoder |
| **STE** | space-time-encoder |
| **S$_i$** | Sendepfade bzw. -antenne |
| **T** | Chipzyklus |
| **tap** | Abgriffstelle |
| **Tx** | Sender |
| **TS** | Übertragungssystem |
| **WU** | Wichtungseinheit |
| **XOR** | Exklusiv-Oder-Gatter |

**Literaturliste**

[1] Broadband Radio Access Networks (BRAN); HIPERLAN Type 2, Physical Layer, ETSI Technical Specification 101 475 V1.1.1 (2000-04)

[2] C. Evci et al, AWACS : System description and main project achievements, proc. 4th ACTS Mobile Communications Summit, 1999, vol 1, pp 63-69

[3] T. Kuhwald, H. Boche, A constrained beamforming algorithm for 2D planar antenna arrays, Proc. IEEE Vehicular Technology Conference '99, Amsterdam, pp. 1-5, September 1999

[4] J. Jelitto, M. Bronzel, G. Fettweis "From Smart Antennas to Reduced Dimension Space-Time Processing", preprint, to be published in Proc. Europ. Wireless Conf. EW2000, Dresden, Sept., 12-14, 2000

[5] G. J. Foschini, Layered Space-Time Architecture for Wireless Communication in a Fading Environment When Using Multiple Antennas, Bell Labs Technical Journal, Vol. 1, No. 2, Autumn 1996, pp 41-59

[6] G. D. Golden, G. J. Foschini, R. A. Valenzuela, P. W. Wolniansky, Detection algorithm and initial laboratory results using V-BLAST space-time communication architecture, Electron Lett. vol. 35 (1999), pp. 14-15

[7] W.W. Peterson and E.J. Weldon, Error Correcting Codes, Cambridge, MA, MIT Press 1972

[8] R. Gold, Optimal binary sequences for spread spectrum multiplex, IEEE Trans. Inform. Theory, IT-13 (1967), pp. 619-621

[9] J.S. Lee and L.E. Miller, CDMA Systems Engineering Handbook, Artech House, Boston, London (1998), pp. 656-663

**Patentansprüche**

1. Funkübertragungsverfahren im Innenraumbereich zur parallelen Funkübertragung von digitalen Datenteilströmen, die durch eine Raum-Zeit-Kodierung abhängig vom gewählten Datenmodulationsformat zu einer Anzahl n Datenteilsignale geformt werden, in einem frequenzbegrenzten, vielpfadigen Übertragungskanal zwischen einer Anzahl n Sendepfaden und einer Anzahl m, wobei m ≥ n, an unterschiedlichen Orten im Innenraumbereich positionierten Empfangspfaden mit einer Messung der Elemente der komplexwertigen Kanalmatrix zur Schätzung des Raum-Zeitverhaltens des Übertragungskanals und einer Raum-Zeit-Signalverarbeitung in den Empfangspfaden unter Ermittlung einer aus der komplexwertigen Kanalmatrix abgeleiteten Wichtungsmatrix zur simultanen Wiedergewinnung der Datenteilsignale, die in einer Raum-Zeit-Dekodierung wieder zu den digitalen Datenteilströmen geformt werden,

**dadurch gekennzeichnet, dass**

jeder Sendepfad (S$_i$, i = 1...n) durch ein eindeutig erkennbares Pilotsignal (P$_i$(t)) bekannter Struktur, Kodierung und guten Korrelationseigenschaften markiert ist, das dem jeweils zu übertragenden Datenteilsignal (D$_i$(t)) in Form einer markierenden Pilotsequenz (PN$_i$) störungsarm überlagert und die Überlagerung als Sendesignal (S$_i$(t)) übertragen wird,

die Messung der Elemente (H$_{ij}$) der komplexwertigen Kanalmatrix ([H]) zeitgleich mit der parallelen Übertragung der Sendesignale (S$_i$(t)) durchgeführt wird und auf den Pilotsequenzen (PN$_i$) basiert, deren übertragene Strukturen in jedem Empfangspfad (E$_j$, j = 1...m) gemessen und mit den bekannten Strukturen korreliert werden, und dass jedes Datenteilsignal (D$_i$(t)) zu seiner Rückgewinnung als analog gewichtete Linearkombination aller Empfangs-

signale ($E_j$(t)) dargestellt wird, wobei die analogen Wichtungssignale ($I_{ij}$(t)) Elemente einer Wichtungsmatrix ([I]) sind, die mittels einer geometrischen Projektionstechnik mit rein algebraischer Struktur aus der komplexwertigen Kanalmatrix ([H]) ermittelt werden.

2. Funkübertragungsverfahren nach Anspruch 1,
   **dadurch gekennzeichnet, dass**
   die Pilotsequenzen ($PN_i$) den den Datenteilsignalen ($D_i$(t)) zugrunde liegenden Datenteilströmen in Bezug auf die Symbolrate und auf das sich aus dem gewählten Modulationsformat ergebende Leistungsdichtespektrum ähnlich sind.

3. Funkübertragungsverfahren nach Anspruch 1 oder 2,
   **dadurch gekennzeichnet, dass**
   die Pilotsequenzen ($PN_i$) als scheinbar zufällige, weitgehend orthogonale Binärsequenzen (PRBS), insbesondere nach Gold und insbesondere mit einer Sequenzlänge gleich oder größer $2^{14}$-1 bit, ausgebildet sind.

4. Funkübertragungsverfahren nach Anspruch 3,
   **dadurch gekennzeichnet, dass**
   die Leistung der Pilotsignale ($P_i$(t)) in einem Bereich von 1 bis 10% der Leistung der Datenteilsignale ($D_i$(t)) liegt.

5. Funkübertragungsverfahren nach einem der Ansprüche 1 bis 4,
   **dadurch gekennzeichnet, dass**
   die Pilotsignale ($P_i$(t)) aus den Empfangssignalen ($E_j$(t)) von den rekonstruierten Sendesignalen $S_i$(t) wieder abgezogen werden.

6. Funkübertragungsverfahren nach einem der Ansprüche 1 bis 5,
   **dadurch gekennzeichnet, dass**
   bei der geometischen Projektionstechnik zur Rekonstruktion der Datenteilsignale ($D_i$(t)) als Wichtungsmatrix ([I]) die Moore-Penrose-Pseudoinverse von der Kanalmatrix ([H]) oder eine davon abgeleitete Matrix benutzt wird.

7. Funkübertragungsverfahren nach einem der Ansprüche 1 bis 6,
   **dadurch gekennzeichnet, dass**
   mit der Korrelation zur Messung der Elemente ($H_{ij}$) der Kanalmatrix ([H]) entsprechend dem Real- und dem Imaginärteil (I, Q) einer komplexwertigen Spannung zwei Messwerte erzeugt werden, die die Amplituden- und Phaseninformationen über den Übertragungskanal enthalten.

8. Funkübertragungsverfahren nach einem der Ansprüche 1 bis 7,
   **dadurch gekennzeichnet, dass**
   als Modulationsformat für die Datenteilsignale die binäre Phasenmodulation, die M-fache Phasenmodulation oder die Quadratur-Amplitudenmodulation, wohingegen für die Pilotsignale die binäre Phasenmodulation benutzt wird.

9. Mobiles Funkübertragungssystem für den Innenraumbereich zur parallelen Funkübertragung von digitalen Datenteilströmen in einem frequenzbegrenzten, vielpfadigen Übertragungskanal zwischen den einzelnen Sende- und Empfangspfaden mit einem Sender, der Multi-Element-Antennen für eine Anzahl n ortsabhängige, parallele Sendepfade und eine Raum-Zeit-Kodierungseinheit in einer sendeseitigen Signalverarbeitungseinrichtung umfasst, und einem Empfänger, der Multi-Element-Antennen für eine Anzahl m, wobei m ≥ n ortsabhängige, parallele Empfangspfade, eine einen digitalen Signalprozessor aufweisende Einrichtung zur Messung der komplexwertigen Kanalmatrix und eine Raum-Zeit-Dekodierungseinheit in einer empfangsseitigen Signalverarbeitungseinrichtung umfasst,
   **dadurch gekennzeichnet, dass** zur Durchführung des Funkübertragungsverfahrens nach einem der Ansprüche 1 bis 8
   der Sender (Tx) in jedem Sendepfad ($S_i$, i = 1...n) einen Pilotsignalgenerator ($PN_i$ generator) zur Erzeugung einer den Sendepfad ($S_i$) markierenden, eindeutig erkennbaren Pilotsequenz ($PN_i$) und eine Einspeisung zur Überlagerung eines aus der markierenden Pilotsequenz ($PN_i$) generierten Pilotsignals ($P_i$(t)) mit dem jeweils zu übertragenden Datenteilsignal ($D_i$(t)) im Sendepfad ($S_i$) enthält,
   der Empfänger (Rx) in jedem Empfangspfad ($E_j$, j= 1...m) eine Abzweigstelle ($SP_j$), über die das jeweilige Empfangssignal ($E_j$(t)) als Monitorsignal ($M_j$(t)) einer Wichtungseinheit (WU) zur Ermittlung von analogen Wichtungssignalen ($I_{ij}$) zugeführt wird, und über alle Empfangspfade ($E_j$) eine analoge Signalkombinationseinheit (ASU) zur Rückgewinnung jedes Datenteilsignals ($D_i$(t)) als analog gewichtete Linearkombination aller Empfangssignale ($E_j$

(t)) unter Anwendung der ermittelten analogen Wichtungssignale ($I_{ij}$) aufweist, wobei die analogen Wichtungssignale ($I_{ij}$) Elemente einer Wichtungsmatrix ([I]) sind, die mittels einer geometrischen Projektionstechnik mit rein algebraischer Struktur aus der komplexwertigen Kanalmatrix ([H]) ermittelt werden, und dass jede Wichtungseinheit (WU) eine der Anzahl der vorhandenen Sendepfade ($S_i$) entsprechende Anzahl Korrelationsschaltungen (correlator$_{ij}$) mit je einem Pilotsignalgenerator (PN$_i$ generator) zur Messung der Struktur des jeweils empfangenen Pilotsignals ($P_i$(t)) und einen allen Wichtungseinheiten (WU) gemeinsamen digitalen Signalprozessor (DSP) zur Ermittlung der komplexwertigen Kanalmatrix ([H]) und der sich daraus ergebenden Wichtungsmatrix (I) sowie einen analogen Komplexwert-Modulator (I-Q mod$_{ij}$) zur Aufprägung des analogen Wichtungssignals ($I_{ij}$) auf das jeweilige Empfangssignal ($E_j$(t)) aufweist.

**10.** Mobiles Funkübertragungssystem nach Anspruch 9,
**dadurch gekennzeichnet, dass**
der Signalgenerator (PN$_i$ generator) zur Erzeugung des Pilotsignals als pseudozufälliger Binär-Sequenz-Generator (PRBS) mit mehrfach rückgekoppelten Schieberegistern (SR$_1$, SR$_2$) ausgebildet ist.


## Claims

**1.** Indoor radio transmission method for parallel radio transmission of digital data sub-streams, which are formed by space-time coding as a function of the selected data modulation format to a number n of data sub-signals, in a frequency-limited, multipath transmission channel between a number n of transmission paths and a number m, with m $\geq$ n, of receive paths positioned at different locations indoors, with measurement of the elements of the complex-valued channel matrix for estimating the space-time response of the transmission channel and space-time signal processing in the receive paths, subject to determination of a weighting matrix derived from the complex-valued channel matrix for simultaneous retrieval of the data sub-signals, which are formed back to digital data sub-streams in space-time decoding,
**characterised in that**,
each transmission path ($S_i$, i = 1...n) is marked by a uniquely idenditifable pilot signal ($P_i$(t)) of known structure, coding and good correlation characteristics, which is overlaid on the data sub-signal ($D_i$(t)) to be transmitted in each instance in the form of a marking pilot sequence (PN$_i$) with little interference and the overlay is transmitted as the transmit signal ($S_i$(t)),
the elements ($H_{ij}$) of the complex-valued channel matrix ([H]) are measured at the same time as the parallel transmission of the transmit signals ($S_i$(t)) and based on the pilot sequences (PN$_i$), the transmitted structures of which are measured in each receive path ($E_j$, j = 1...m) and correlated to the known structures, and
each data sub-signal ($D_i$(t)) is represented for its recovery as a linear combination of all receive signals ($E_j$(t)) with analogue weighting, the analogue weighting signals ($I_{ij}$(t)) being elements of a weighting matrix ([I]), which are determined by means of a geometric projection technique with a purely algebraic structure from the complex-valued channel matrix ([H]).

**2.** Radio transmission method according to Claim 1,
**characterised in that,**
the pilot sequences (PN$_i$) are similar to the data sub-streams forming the basis of the data sub-signals ($D_i$(t)) with regard to symbol rate and the power density spectrum resulting from the selected modulation format.

**3.** Radio transmission method according to Claim 1 or 2,
**characterised in that,**
the pilot sequences (PN$_i$) are configured as apparently random, largely orthogonal binary sequences (PRBS), in particular according to Gold and in particular with a sequence length greater than or equal to $2^{14}$-1 bit.

**4.** Radio transmission method according to Claim 3,
**characterised in that,**
the power of the pilot signals ($P_i$(t)) is in a range from 1 to 10% of the power of the data sub-signals ($D_i$(t)).

**5.** Radio transmission method according to one of Claims 1 to 4,
**characterised in that,**
the pilot signals ($P_i$(t)) from the receive signals ($E_j$(t)) are subtracted again from the reconstructed transmit signals $S_i$(t).

**6.** Radio transmission method according to one of Claims 1 to 5,
**characterised in that**,
with the geometric projection technique for reconstruction of the data sub-signals ($D_i(t)$) the Moore-Penrose pseudo-inverse of the channel matrix ([H]) or a matrix derived therefrom is used as the weighting matrix ([I]).

**7.** Radio transmission method according to one of Claims 1 to 6,
**characterised in that**,
with the correlation for measuring the elements ($H_{ij}$) of the channel matrix ([H]) corresponding to the real and imaginary part (I, Q) of a complex-valued voltage, two measurement values are generated, which contain amplitude and phase information relating to the transmission channel.

**8.** Radio transmission method according to one of Claims 1 to 7,
**characterised in that**,
binary phase modulation, m-times phase modulation or quadrature amplitude modulation is used as the modulation format for the data sub-signals, while binary phase modulation is used for the pilot signals.

**9.** Mobile indoor radio transmission system for the parallel radio transmission of digital data sub-streams in a frequency-limited, multipath transmission channel between the individual transmission and receive paths with a transmitter, which has multi-element antennae for a number n of location-dependent, parallel transmission paths and a space-time coding unit in a signal processing device on the transmit side, and a receiver, which has multi-element antennae for a number m, where $m \geq n$, of location-dependent, parallel receive paths, a device having a digital signal processor for measuring the complex-valued channel matrix and a space-time decoding unit in a signal processing device on the receive side,
**characterised in that**, to implement the radio transmission method according to one of Claims 1 to 8
the transmitter (Tx) contains a pilot signal generator ($PN_i$ generator) in each transmission path ($S_i$, i = 1...n) to generate a pilot sequence ($PN_i$) that marks the transmission path ($S_i$) and is uniquely identifiable and an injector to overlay a pilot signal ($P_i(t)$) generated from the marking pilot sequence ($PN_i$) with the data sub-signal ($D_i(t)$) to be transmitted in each instance in the transmission path ($S_i$),
the receiver (Rx) has a branch-off point ($SP_j$) in each receive path ($E_j$, j= 1...m), via which the respective receive signal ($E_j(t)$) is fed as the monitor signal ($M_j(t)$) to a weighting unit (WU) to detect analogue weighting signals ($I_{ij}$), and an analogue signal combination unit (ASU) across all receive paths ($E_j$), into which all the analogue weighting signals ($I_{ij}$) pass, and each weighting unit (WU) has a number of correlation circuits ($correlator_{ij}$) corresponding to the number of transmission paths ($S_i$) present, each with a pilot signal generator ($PN_i$ generator) to measure the structure of the respectively received pilot signal ($P_i(t)$) and a digital signal processor (DSP) common to all the weighting units (WU) to detect the complex-valued channel matrix ([H]) and the resulting weighting matrix (I) and an analogue complex-value modulator (I-Q $mod_{ij}$) to impress the analogue weighting signal ($I_{ij}$) onto the respective receive signal ($E_j(t)$).

**10.** Mobile radio transmission system according to Claim 9,
**characterised in that**,
the signal generator ($PN_i$ generator) to generate the pilot signal is configured as a pseudo-random binary sequence generator (PRBS) with multiple feedback shift registers ($SR_1$, $SR_2$).

**Revendications**

**1.** Procédé de radiotransmission dans la zone intérieure pour la radiotransmission parallèle de flux partiels de données numériques, qui sont mis en forme par un codage spatio-temporel en fonction du format de modulation de données choisi en un nombre n de signaux partiels de données, dans un canal de transmission limité en fréquence et multichemins entre un nombre n de chemins d'émission et un nombre m de chemins de réception, $m \geq n$, positionnés à différents endroits dans la zone intérieure avec une mesure des éléments de la matrice de canal à valeurs complexes pour l'évaluation du comportement spatio-temporel du canal de transmission et d'un traitement de signal spatio-temporel dans les chemins d'émission avec le calcul d'une matrice de pondération déduite de la matrice de canal à valeurs complexes pour la récupération simultanée des signaux partiels de données, qui sont mis en forme dans un décodage spatio-temporel de nouveau pour obtenir les flux partiels de données numériques,
**caractérisé en ce que**,
chaque chemin d'émission ($S_i$, i = 1 ...n) est marqué par un signal pilote ($P_i(t)$) clairement identifiable avec une structure connue, un codage et de bonnes propriétés de corrélation, qui est superposé avec peu de perturbation au signal partiel de données (D$_i$(t)) à transmettre respectivement sous la forme d'une séquence pilote (PN$_i$) marquante et la superposition est transmise comme signal d'émission (S$_i$(t)),

la mesure des éléments (H$_{ij}$) de la matrice de canal ([H]) à valeurs complexes étant effectuée en même temps que la transmission parallèle des signaux d'émission (S$_i$(t)) et étant basée sur les séquences pilotes (PN$_i$), dont les structures transmises sont mesurées dans chaque chemin d'émission (E$_j$, j = 1 ...m) et sont mises en corrélation avec les structures connues, et **en ce que**

chaque signal partiel de données (D$_i$(t)) est représenté pour sa récupération sous la forme d'une combinaison linéaire pondérée de façon analogique de tous les signaux de réception (E$_j$(t)), les signaux de pondération (I$_{ij}$(t)) analogiques étant des éléments d'une matrice de pondération ([I]), qui sont calculés au moyen d'une technique de projection géométrique avec une structure purement algébrique à partir de la matrice de canal ([H]) à valeurs complexes.

2. Procédé de radiotransmission selon la revendication 1,
   **caractérisé en ce que**
   les séquences pilotes (PN$_i$) sont similaires aux flux partiels de données à la base des signaux partiels de données (D$_i$(t)) en ce qui concerne le débit de symboles et le spectre de densité de puissance résultant du format de modulation choisi.

3. Procédé de radiotransmission selon la revendication 1 ou 2,
   **caractérisé en ce que**
   les séquences pilotes (PN$_i$) sont réalisées sous la forme de séquences binaires (PRBS) apparemment aléatoires et largement orthogonales, en particulier selon Gold et en particulier avec une longueur de séquence égale ou supérieure à $2^{14}$ - 1 bit.

4. Procédé de radiotransmission selon la revendication 3,
   **caractérisé en ce que**
   la puissance des signaux pilotes (P$_i$(t)) se situe dans une plage allant de 1 à 10 % de la puissance des signaux partiels de données (D$_i$(t)).

5. Procédé de radiotransmission selon l'une quelconque des revendications 1 à 4,
   **caractérisé en ce que**
   les signaux pilotes (P$_i$(t)) provenant des signaux d'émission (E$_j$(t)) sont soustraits de nouveau des signaux d'émission S$_i$(t) reconstruits.

6. Procédé de radiotransmission selon l'une quelconque des revendications 1 à 5,
   **caractérisé en ce que**
   avec la technique de projection géométrique pour la reconstruction des signaux partiels de données (D$_i$(t)), le pseudo-inverse de Moore-Penrose de la matrice de canal ([H]) ou une matrice déduite de celle-ci est utilisé comme matrice de pondération ([I]).

7. Procédé de radiotransmission selon l'une quelconque des revendications 1 à 6,
   **caractérisé en ce que**
   avec la corrélation pour la mesure des éléments (H$_{ij}$) de la matrice de canal ([H]) en fonction de la partie réelle et de la partie imaginaire (I, Q) d'une tension à valeurs complexes, on génère deux valeurs de mesure qui contiennent les informations relatives aux amplitudes et phases sur le canal de transmission.

8. Procédé de radiotransmission selon l'une quelconque des revendications 1 à 7,
   **caractérisé en ce que**
   comme format de modulation pour les signaux partiels de données, on utilise la modulation de phase binaire, la modulation de phase M fois ou la modulation d'amplitude en quadrature, mais la modulation de phase binaire pour les signaux pilotes.

9. Système mobile de radiotransmission pour la zone intérieure pour la radiotransmission parallèle de flux partiels de données numériques dans un canal de transmission limité en fréquence et multichemins entre les chemins d'émission et de réception individuels avec un émetteur, qui comprend des antennes multiéléments pour un nombre n de chemins d'émission parallèles et dépendants du lieu et une unité de codage spatio-temporelle dans un appareil de traitement de signal côté émission, et un récepteur, qui comprend des antennes multiéléments pour un nombre m de chemins d'émission, m ≥ n, parallèles et dépendants du lieu, un appareil présentant un processeur de signal numérique pour la mesure de la matrice de canal à valeurs complexes et une unité de codage spatio-temporelle dans un appareil de traitement de signal côté réception,

**caractérisé en ce que**, pour la mise en oeuvre du procédé de radiotransmission selon l'une quelconque des revendications 1 à 8

l'émetteur (Tx) contient dans chaque chemin d'émission ($S_i$, i = 1...n) un générateur de signal pilote ($PN_i$ generator) pour la génération d'une séquence pilote $PN_i$) marquant le chemin d'émission ($S_i$) et clairement identifiable et une injection pour la superposition d'un signal pilote ($P_i(t)$) généré à partir de la séquence pilote ($PN_i$) marquante avec le signal partiel de données à transmettre respectivement dans le chemin d'émission ($S_i$),

le récepteur (Rx) présente dans chaque chemin de réception ($E_j$, j = 1...m) un point de dérivation ($SP_j$), par lequel le signal de réception ($E_j,(t)$) respectif est amené comme signal de moniteur ($M_j(t)$) à une unité de pondération (WU) pour le calcul de signaux de pondération ($I_{ij}$) analogiques, et par tous les chemins de réception ($E_j$) une unité analogique de combinaison du signal (ASU) pour la récupération de chaque signal partiel de données ($D_i(t)$) comme combinaison linéaire pondérée de façon analogique de tous les signaux de réception ($E_j,(t)$) sous utilisation des signaux de pondération ($I_{ij}$) analogiques calculés, les signaux de pondération ($[I_{ij}$) analogiques étant des éléments d'une matrice de pondération ($[I]$) qui sont calculés au moyen d'une technique de projection géométrique à structure purement algébrique à partir de la matrice de canal ($[H]$) à valeurs complexes,

et **en ce que** chaque unité de pondération (WU) présente un nombre de circuits de corrélation ($correlator_{ij}$) correspondant au nombre des chemins d'émission ($S_i$) présents avec respectivement un générateur de signal pilote ($PN_i$ generator) pour la mesure de la structure du signal pilote ($P_i(t)$) respectivement reçu et un processeur de signal (DSP) numérique commun à toutes les unités de pondération (WU) pour le calcul de la matrice de canal ($[H]$) à valeurs complexes et de la matrice de pondération (I) qui en résulte ainsi qu'un modulateur de valeurs complexes ($I\text{-}Q\ mod_{ij}$) analogique pour l'application du signal de pondération ($I_{ij}$) analogique sur le signal de réception (($E_j(t)$) respectif.

10. Système mobile de radiotransmission selon la revendication 9,
**caractérisé en ce que**
le générateur de signal ($PN_i$ generator) pour la génération du signal pilote est conçu comme un générateur de séquence binaire pseudo-aléatoire (PRBS) avec des registres à décalage ($SR_1$, $SR_2$) réinjectés plusieurs fois.

**MIMO**

indoor multi-channel

$n \leq m$

data in → **Tx** — $S_1$, $S_2$, $S_n$ ... indoor multi-channel ... $E_1$, $E_2$, $E_3$, $E_m$ — **Rx** → data out

**Fig.1**

**Fig.2**

Fig.3

taps (SR$_1$)  1,6,10,14
taps (SR$_2$)  1,2,3,6,8,9,
10,11,13,14

Fig.4

Fig.5

Fig.6

Fig.7